# EUROPEAN PATENT SPECIFICATION

(11) **EP 2 281 524 B1**
(45) Date of publication and mention of the grant of the patent: **31.10.2012**
(21) Application number: 09167279.0
(22) Date of filing: 05.08.2009
(51) Int. Cl.: A61C 5/00, A61C 5/08

(54) **Dental post**
Dentalpfosten
Tenon dentaire

(43) Date of publication of application: 09.02.2011
(73) Proprietor: Nordin, Harald, CH-1822 Chernex (CH); Nordin, Peter E., 1822 Chernex (CH)
(72) Inventor: Nordin, Harald, CH-1822 Chernex (CH); Nordin, Peter E., 1822 Chernex (CH)
(74) Representative: Störzbach, Michael Andreas

(56) References cited:
- EP-A- 0 260 446
- EP-A- 0 370 676
- EP-A- 0 522 221
- WO-A-96/29017
- DE-A1- 3 825 601
- FR-A- 2 874 498
- US-A- 3 557 454
- US-A- 4 479 783
- US-A- 5 919 044
- US-A- 5 989 032
- US-A1- 2004 166 472
- US-B1- 6 402 519
- US-B1- 6 439 890

## Description

The invention relates to a dental post consisting of fibre-reinforced material with substantially uniformly directed fibers and mountable in a tooth root canal for fixing a dental prosthetic structure such as a tooth crown on a tooth stump, wherein said post comprises a tapered portion extending over at least one third of its total length towards its proximal end, according the preambule of claim 1 and 15.

Patent application no. FR 2 874 498 describes a dental post consisting of fiber-reinforced material, wherein fibers and X-ray absorbing particles are embedded in a composite resin matrix. An advantage of the glass or carbon fibers located within the matrix lies in an improvement of the mechanical properties of the post leading in particular to a similar modulus of elasticity as compared to that of the dentine. Besides the mechanical performance of the composites, a high degree of radiopacity and of translucency are important factors to be considered in the design of such a device. In this regard, above cited reference proposes to include X-ray absorbing particles with a size in between 95 nm and 200 nm in the resin matrix in order to allow the resin material to be translucent to light rays with a respective wavelength. Thus, a certain degree of light conduction is ensured within the resin matrix in order to allow light transmission across the interior of said dental post. Furthermore, the described post comprises a tapered structure running with a constant slope in the longitudinal direction and facilitating fitting inside the cavity formed by a tooth root canal.

A disadvantage of this dental post is that no retention means are provided in order to secure the position of the post within the root canal. A further drawback of this dental post is that the exploitation of the resin matrix as a light conductor not only restricts the choice of a preferred X-ray absorbing material in order to avoid the scattering of light rays, but also leads more generally to a certain loss that is related to light diffusion occuring in said resin matrix.

Patent application no. FR 2 882 646 discloses a dental post comprising a conical end portion and a threaded intermediate portion. The advantage of the threaded portion is an improved mechanical retention of the post within the tooth root canal e.g. for preventing an axial or rotational displacement of the post. The proposed slope and shape of the thread is mainly adapted to the intermediate cylindrical surface of the post and does not extend over its conical end portion at which the disposal of such a thread may induce an undesired breaking point. Furthermore, the narrow spacing between adjacent circumferential cycles of the single thread may lead to a large rate of scattering or diffusion of light when applied to a light conducting dental post.

It is an object of the present invention to provide a dental post with an enhanced mechanical retention. A further object of the present invention is to provide a dental post with improved optical properties, in particular by also providing enhanced retention properties. Another object of the present invention is to provide such a dental post with a high degree of radiopacity by maintaining its improved optical properties and/or its enhanced mechanical retention properties. Still another object of the present invention is to provide an improved dental post which avoids at least one of the aforementioned problems of prior art devices.

At least one of the above objects is achieved with a dental post comprising the features of patent claim 1 and/or patent claim 15. Advantageous embodiments of the invention are defined in the dependent claims.

Thus, according to a first aspect of the invention, at least one groove is provided on the circumferential surface of said tapered portion extending in the longitudinal direction of said post and also over only part of its circumference. Said groove is applicable as a retention means for retaining said dental post in a secured position in the tooth root canal and preventing an axial lift off or rotational displacement of the post and/or the dental prosthetic structure that is to be fixed on the post. Moreover, such a groove may act as an evacuation slot for the resin cement used for fixing said post.

The proposed fraction of the circumference of said surface, along which the course of said groove is extending, allows a disposal of said groove on said tapered portion without risking the breakage of said dental post. More precisely, a breakage of the device may be induced by the choice of a different shape of a groove, such as a thread or similar structure - as confirmed by various experiments previous to the present invention -, since the required amount of thinning down of material establishes a weak point on said tapered portion at which said dental post is prone to break. Moreover, the limited coverage of a groove according to the invention with respect to said circumferential surface yields a comparatively large area with unmodified properties, in particular light irradiation properties. Preferably, said groove substantially extends over the whole length of said post in order to increase mechanical retention along the total device length.

Depending on the material properties of said post and the slope and/or the minimum diameter of said tapered portion also a different structure of a retention groove is conceivable within the scope of the present invention, in particular for a tapered portion with a higher rigidity. For this purpose, the invention suggests that at least one longitudinal groove is provided on said surface which is extending at most twice around the circumference of said surface in order to achieve improved retention properties.

Preferably, several longitudinal grooves according to one of the above described embodiments of a groove are provided on said circumferential surface in order to achieve enhanced retention of said post. More preferred, two to twenty of said grooves are provided and most preferred, two to five grooves are disposed on said surface. In particular, excellent retention properties with insignificant risk of breakage have been demonstrated in a prototype of a dental post with three of said grooves.

Preferably, each of said grooves is extending over a different portion of said circumference in order to equally distribute the mechanical retention of the post around said surface and to minimize a potential risk of breakage originating from circumjacently overlapping grooves. As a further provision for achieving good retention properties, at least three-quarter of said circumference, more preferred substantially the whole circumference, may be covered by said longitudinal grooves.

At least one of said grooves exhibits an inclined course with respect to the longitudinal axis of said post for allowing an improved retention of said post. In particular, said groove may have substantially a helical form that is at least partially winding or wrapped around said post. Thus, said groove may exhibit an angle of wrap around said post depending on the length of said post and/or on the fraction of circumference to be covered by said grooves. Preferably, said angle of wrap around said post is at least 50 degrees, more preferred at least 70 degrees, for each groove with repect to a transverse axis normal to the longitudinal axis of said post.

Preferably, at least one of said grooves substantially exhibits a round cross section in order to establish a smooth surface within the groove and to achieve good light irradiation also from the surface portion with the groove. In particular, said groove may present substantially a semicircular structure. The preferred width and/or depth of said grooves is at least 0.01 mm and at most 1 mm, wherein a range in between 0.1 mm and 0.5 mm is more preferred. More preferred, the width and/or depth of said grooves decreases toward the proximal end of said post in order to further decrease the risk of breakage at the increasing taper. More generally, the cross-sectional size of said grooves may decrease towards said proximal end of said post. Thus, due to the narrowing of said grooves along the taper of said post, the risk of breaking of said post can be minimized.

According to another aspect of the invention, at least a fraction of said fibers is adapted for light conduction within said post. Due to their uniform arrangement within said post, said light conducting fibers are substantially directed from the distal end towards the circumferential surface of said post for allowing light conduction by means of said fibers from said distal end towards the interior of said post. In this respect an arrangement of fibers may be applicable as disclosed in EP 1 078 608 A1 of the same applicant, which is herewidth enclosed by reference. This allows to exploit the superior light conducting properties of fibers, such as glass fibers or optical fibers, as compared to the light conduction through the resin material. For facilitating light coupling into said fibers, the invention suggests that ends of said light conducting fibers at the distal end of said post are prepared as a light entering surface. This may be achieved by a planar cutting of said fibers. In addition, said fibers may be grinded and/or polished at said distal end for achieving a superiour coupling. Furthermore, said fibers may be provided with a coating at said distal end which allows improved coupling of light into said fibers.

For achieving a uniform distribution of light irradiation on the circumferential surface of said post, said fibers preferably are homogeneously distributed within said post. This may imply that the density of fibers per unit volume is approximately constant within said post. Preferably, at least a fraction of said fibers are disposed in parallel with respect to one or more axes extending through said post to allow light conduction in a preferred direction towards said circumferential surface. More preferred, one of these axes is constituted by the longitudinal axis of said post such that at least a fraction of said fibers are longitudinally directed within said post allowing uniform light conduction towards said circumferential surface. In a one-axial arrangement of fibers, at least a major part of said fibers may extend in said longitudinal direction. In a multiaxial arrangement of fibers it is also conceivable that part of the fibers may extend in the longitudinal direction of said post and another fraction of fibers may extend at a certain angle with respect to said longitudinal axis.

Preferably, at least a fraction of said light conducting fibers extend from said distal end to said circumferential surface in order to allow light conduction directly to said circumferential surface by means of said fibers. In particular, the invention suggests to use tapering of said circumferential surface, e.g. by cutting said fibre-reinforced material accordingly, in order to connect proximal ends of said fibers with one respective point of said circumferential surface. Preferably, the degree of said tapering per unit length - on the average over the whole length of said post - is at least one percent and does not exceed an average angle of conicity of about 35 degrees, more preferred of about 15 degrees.

Above described grooves are particularly advantageous for such a tapering of a dental post in order to provide improved retention of said post with improved optical properties. It is understood, that the improved optical properties stemming from said light conducting fibers are also conceivable in a post without a retention means or with a different retention means as compared to said grooves. Thus, the present invention is also directed more generally to a dental post with a tapered portion comprising at least a fraction of fibers adapted for light conduction within said post.

Preferably, said post is further composed of a composite resin matrix, wherein a fraction of at least 40% and at most 80% in volume per weight of the total content is constituted by said fibers embedded in said matrix. Most preferred, said post consists of fibre-reinforced material, wherein the reinforcement fibers may be silica and/or glass and/or carbon and/or quartz fibers. For ensuring the desired optical properties the use of optical fibers, in particular glass and/or silica fibers, as a dominating constituent is preferred. The resin matrix may be constituted by polymers.

A conical shape of said circumferential surface with an increasing inclination is preferred for allowing the desired light emission properties from said surface. Accordingly, the invention suggests that the slope of said taper increases towards the proximal end of said dental post. Preferably, said taper substantially extends over the whole length of said post in order to allow homogenous light irradiation over the total length of said circumferential surface. Thus, due to the tapered structure of said proximal portion and depending on the slope of the taper, the connection of said fibers with said circumferential surface is achieved for allowing light conduction towards the desired points of irradiation.

According to a further aspect of the invention, X-ray absorbing material is embedded in said post, in particular within the resin matrix, for ensuring a high degree of radiopacity. When added to the resin, no scattering of light via said X-ray absorbing material has to be considered in the design of the post for achieving the desired light irradatiation properties, due to a direct light conduction towards said circumferential surface by means of said light conducting fibers. Preferably, said X-ray absorbing material consists of discrete particles, in particular metal oxides such as barium oxide and/or flourinated compounds such as yttrium. It is understood that also carbonates are conceivable for achieving the desired radiopacity.

The invention will be described in more detail in the following description of a preferred exemplary embodiment with reference to the accompanying drawings. In the drawings:
- Fig. 1: is a perspective view of a dental post;
- Fig. 2: is a top view of the dental post shown in Fig. 1; and
- Fig. 3: is a lateral sectional view of the dental post shown in Figgs. 1 and 2.

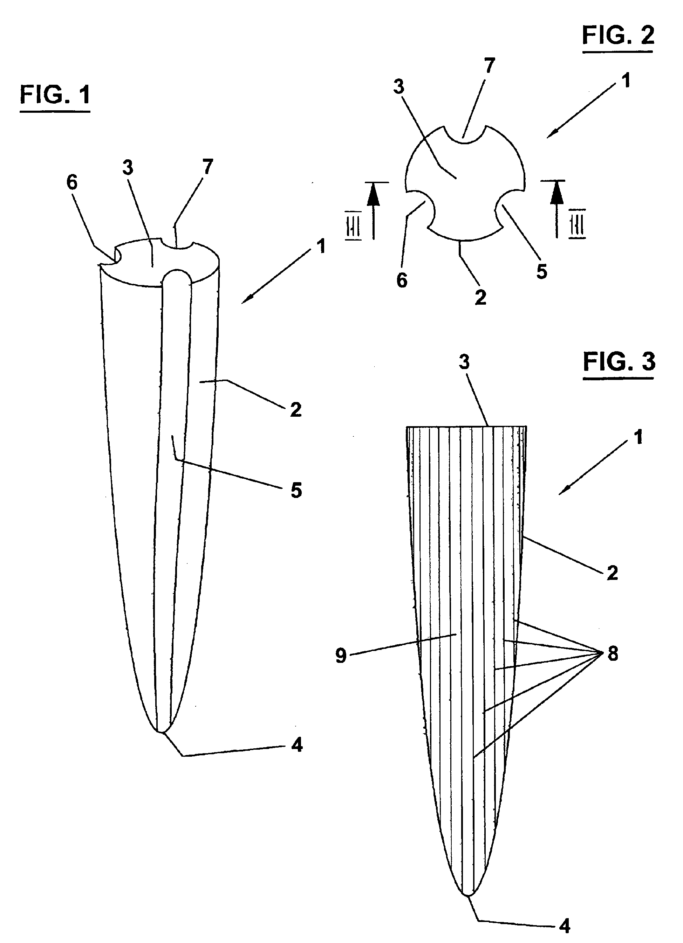

Figgs. 1 to 3 depict a dental post 1 according to an embodiment of the invention. According to the perspective view shown in Fig. 1 and the top view illustrated in Fig. 2, said dental post 1 comprises a circumferential surface 2 with a longitudinal taper extending from the distal end 3 to the proximal end 4 of said post 1. The course of said taper is determined by a continously increasing slope towards the proximal end 4.

Three grooves 5, 6, 7 have been formed in said circumferential surface 2, which are longitudinally extending over the total length of said post 1 and twisted along the circumference of said surface 2. Thus, each groove 5, 6, 7 extends approximately over one third of the circumference of said surface 2 along a helical course. Said grooves 5, 6, 7 are equally distributed around said surface 2, such that each groove is extending over a different portion of its circumference. Moreover, said grooves 5, 6, 7 essentially have a semicircular cross section which size continously decreases towards the proximal end 4 of said dental post 1.

According to the sectional view shown in Fig. 3, the course of the fibers 8 within the resin matrix 9 is schematically illustrated. Said fibers 8 substantially run longitudinally along the axis of said post 1, such that each fiber arrives at a different point of the circumferential surface 2. Said fibers 8 are homogeneously distributed within said post 1 in order to yield a uniform distribution of light irradiation on the circumferential surface 2 of said post 1. At the distal end 3 the end portion of fibers 8 are horizontally aligned along a common surface. Said fibers 8 comprise a polishing at said distal end 3 in order to improve the light coupling characteristics. Barium ions are included in the resin matrix 9 for achieving radiopacity.

Numerous alterations of the device described herein will suggest themselves to those skilled in the art. However, it is to be understood that the present disclosure relates to a preferred embodiment of the invention which is for purposes of illustration only and is not to be construed as a limitation of the invention. For example, although in the specific embodiment described herein the longitudinal grooves 5, 6, 7 essentially have a semicircular form, also other cross-sectional shapes are conceivable.

Moreover, the present invention is not limited to a dental post comprising one or more of above described grooves but also encompasses a dental post consisting of fibre-reinforced material with substantially uniformly directed fibers 8, said post comprising a tapered portion extending over at least one third of its total length towards its proximal end 4, wherein at least a fraction of said fibers 8 is adapted for light conduction within said post and ends of said light conducting fibers 8 at the distal end 3 of said post are prepared as a light entering surface. Such a post may be used to achieve improved light conducting properties, as described above. Advantageous embodiments of such a post are defined by the claims 1 to 14 and according to the above description.

## Claims

1. Dental post consisting of fibre-reinforced material with substantially uniformly directed fibers (8) and mountable in a tooth root canal for fixing a dental prosthetic structure on a tooth stump, wherein said post comprises a tapered portion extending over at least one third of its total length towards its proximal and (4), **characterized in that** at least one groove (5, 6, 7) is provided on the circumferential surface of said tapered portion extending in the length direction of said post with an inclined course with respect to the longitudinal axis of said post over part of the circumference or at most twice around the circumference of said tapered portion.

2. Dental post according to claim 1, **characterized in that** several, preferably 2 to 20, of said grooves (5, 6, 7) are provided.

3. Dental post according to claim 2, **characterized in that** each groove (5, 6, 7) is extending over a different portion of said circumference.

4. Dental post according to at least one of the claims 1 to 3, **characterized in that** at least three-quarter of said circumference, more preferred substantially the whole circumference, is covered by staid grooves (5, 6, 7).

5. Dental post according to at least one of the claims 1 to 4, **characterized in that** the width and/or depth of said grooves (5, 6, 7) decreases towards the proximal end (4) of said post.

6. Dental post according to at least one of the claims 1 to 5, **characterized in that** said grooves (5, 6, 7) substantially extend over the whole length of said post.

7. Dental post according to at least one of the claims 1 to 6, **characterized in that** said grooves (5, 6, 7) substantially exhibit a round cross section.

8. Dental post according to at least one of the claims 1 to 7, **characterized in that** at least a fraction of said fibers (8) are adapted for light conduction within said post, wherein ends of said light conducting fibers (8) at the distal end (3) of said post are prepared as a light entering surface.

9. Dental post according to claim 8, **characterized in that** at least a fraction of said light conducting fibers (8) extend from said distal end (3) to said circumferential surface (2) in order to allow light conduction towards said circumferential surface (2).

10. Dental post according to claim 8 or 9, **characterized in that** said fibers are grinded and/or polished at said distal end.

11. Dental post according to at least one of the claims 1 to 10, **characterized in that** the slope of said taper increases towards the proximal end (4) of said post.

12. Dental post according to at least one of the claims 1 to 11, **characterized in that** X-ray absorbing material is embedded in said post.

13. Dental post according to claim 12, **characterized in that** said X-ray absorbing material consists of discrete particles, in particular metal oxides such as barium oxide and/or flourinated compounds such as yttrium.

14. Dental post according to at least one of the claims 1 to 13, **characterized in that** said post is further composed of a composite resin matrix (9), wherein a fraction of at least 40% and at most 80% in volume per weight of the total content is constituted by said fibers (8) embedded in said matrix (9).

## Patentansprüche

1. Zahnstift, der aus faserverstärktem Material mit im Wesentlichen einheitlich ausgerichteten Fasern (8) besteht und in einem Zahnwurzelkanal anbringbar ist, um einen zahnprothetischen Aufbau an einem Zahnstumpf zu befestigen, wobei der Stift einen verjüngten Teil aufweist, der sich über mindestens ein Drittel seiner Gesamtlänge zum proximalen Ende (4) hin erstreckt, **dadurch gekennzeichnet, dass** die Umfangsfläche des verjüngten Teils mindestens eine Rille (5, 6, 7) aufweist, die in der Längsrichtung des Stifts schräg zur Längsachse des Stifts über einen Teil des Umfangs oder höchstens zweimal um den Umfang des verjüngten Teils verläuft.

2. Zahnstift nach Anspruch 1, **dadurch gekennzeichnet, dass** mehrere, vorzugsweise 2 bis 20 der Rillen (5, 6, 7) vorhanden sind.

3. Zahnstift nach Anspruch 2, **dadurch gekennzeichnet, dass** jede Rille (5, 6, 7) über einen anderen Teil des Umfangs verläuft.

4. Zahnstift nach wenigstens einem der Ansprüche 1 bis 3, **dadurch gekennzeichnet, dass** mindestens drei Viertel des Umfangs, bevorzugt im Wesentlichen der ganze Umfang von den Rillen (5, 6, 7) bedeckt ist.

5. Zahnstift nach wenigstens einem der Ansprüche 1 bis 4, **dadurch gekennzeichnet, dass** die Breite und/oder die Tiefe der Rillen (5, 6, 7) zum proximalen Ende (4) des Stifts hin abnimmt.

6. Zahnstift nach wenigstens einem der Ansprüche 1 bis 5, **dadurch gekennzeichnet, dass** sich die Rillen (5, 6, 7) im Wesentlichen über die ganze Länge des Stifts erstrecken.

7. Zahnstift nach wenigstens einem der Ansprüche 1 bis 6, **dadurch gekennzeichnet, dass** die Rillen (5, 6, 7) einen im Wesentlichen runden Querschnitt aufweisen.

8. Zahnstift nach wenigstens einem der Ansprüche 1 bis 7, **dadurch gekennzeichnet, dass** mindestens ein Teil der Fasern (8) zur Lichtleitung innerhalb des Stifts geeignet ist, wobei Enden der lichtleitenden Fasern (8) am distalen Ende (3) des Stifts als Lichteintrittsfläche ausgebildet sind.

9. Zahnstift nach Anspruch 8, **dadurch gekennzeichnet, dass** mindestens ein Teil der lichtleitenden Fasern (8) vom distalen Ende (3) zur Umfangsfläche (2) verläuft, um Licht zur Umfangsfläche (2) leiten zu können.

10. Zahnstift nach Anspruch 8 oder 9, **dadurch gekennzeichnet, dass** die Fasern am distalen Ende geschliffen und/oder poliert sind.

11. Zahnstift nach wenigstens einem der Ansprüche 1 bis 10, **dadurch gekennzeichnet, dass** die Steigung der Verjüngung zum proximalen Ende (4) des Stifts hin zunimmt.

12. Zahnstift nach wenigstens einem der Ansprüche 1 bis 11, **dadurch gekennzeichnet, dass** im Stift röntgenabsorbierendes Material eingebettet ist.

13. Zahnstift nach Anspruch 12, **dadurch gekennzeichnet, dass** das röntgenabsorbierende Material aus diskreten Partikeln besteht, insbesondere aus Metalloxiden wie Bariumoxid und/oder fluorierten Verbindungen wie Yttrium.

14. Zahnstift nach wenigstens einem der Ansprüche 1 bis 13, **dadurch gekennzeichnet, dass** der Stift weiter aus einer Kompositharzmatrix (9) besteht, wobei ein Anteil von mindestens 40 und höchstens 80 Gewichts-/Volumenprozenten des Gesamtgehalts aus den Fasern (8) besteht, die in der Matrix (9) eingebettet sind.

## Revendications

1. Tenon dentaire constitué d'un matériau renforcé de fibres avec des fibres (8) substantiellement uniformément dirigées et pouvant être implanté dans un canal radiculaire dentaire afin de fixer une structure prothétique dentaire sur un moignon dentaire, où ledit tenon présente une partie conique s'étendant sur au moins un tiers de sa longueur totale vers son extrémité proximale (4), **caractérisé en ce qu'**au moins un sillon (5, 6, 7) est pourvu sur la surface circonférentielle de ladite partie conique qui s'étend en direction longitudinale dudit tenon avec une allure inclinée par rapport à l'axe longitudinal dudit tenon sur une partie de sa circonférence ou jusqu'à deux fois autour de la circonférence de ladite partie conique.

2. Tenon dentaire selon la revendication 1, **caractérisé en ce que** plusieurs, préférablement 2 à 20 desdits sillons (5, 6, 7) sont pourvus.

3. Tenon dentaire selon la revendication 2, **caractérisé en ce que** chaque sillon (5, 6, 7) s'étend sur une partie différente de ladite circonférence.

4. Tenon dentaire selon l'une au moins des revendications 1 à 3, **caractérisé en ce qu'**au moins trois quarts de ladite circonférence, plus préférablement substantiellement la circonférence entière, est recouverte desdits sillons (5, 6, 7).

5. Tenon dentaire selon l'une au moins des revendications 1 à 4, **caractérisé en ce que** la largeur et/ou la profondeur desdits sillons (5, 6, 7) diminue vers l'extrémité proximale (4) dudit tenon.

6. Tenon dentaire selon l'une au moins des revendications 1 à 5, **caractérisé en ce que** lesdits sillons (5, 6, 7) s'étendent substantiellement sur la longueur entière dudit tenon.

7. Tenon dentaire selon l'une au moins des revendications 1 à 6, **caractérisé en ce que** lesdits sillons (5, 6, 7) présentent substantiellement une coupe transversale ronde.

8. Tenon dentaire selon l'une au moins des revendications 1 à 7, **caractérisé en ce qu'**au moins une partie desdites fibres (8) est adaptée à conduire la lumière à l'intérieur dudit tenon, les extrémités desdites fibres (8) conductrices de lumière à l'extrémité distale (3) dudit tenon étant façonnées en tant que surface d'entrée de la lumière.

9. Tenon dentaire selon la revendication 8, **caractérisé en ce qu'**au moins une partie desdites fibres conductrices de lumière (8) s'étend de ladite extrémité distale (3) vers ladite surface circonférentielle (2) afin de permettre une conduction de lumière vers ladite surface circonférentielle (2).

10. Tenon dentaire selon la revendication 8 ou 9, **caractérisé en ce que** lesdites fibres sont meulées et/ou polies à ladite extrémité distale.

11. Tenon dentaire selon l'une au moins des revendications 1 à 10, **caractérisé en ce que** la pente de ladite conicité augmente vers l'extrémité proximale (4) dudit tenon.

12. Tenon dentaire selon l'une au moins des revendications 1 à 11, **caractérisé en ce qu'**un matériau absorbeur de rayons X est encastré dans ledit tenon.

13. Tenon dentaire selon la revendication 12, **caractérisé en ce que** ledit matériau absorbeur de rayons X est constitué de particules discrètes, en particulier d'oxydes métalliques tels que l'oxyde de baryum et/ou de composés fluorés tels que l'yttrium.

14. Tenon dentaire selon l'une au moins des revendications 1 à 13, **caractérisé en ce que** ledit tenon est par ailleurs composé d'une matrice de résine composite (9) où une fraction d'au moins 40 % et au plus 80 % en poids/volume de la teneur totale est constituée par lesdites fibres (8) encastrées dans ladite matrice (9).
